# EUROPEAN PATENT APPLICATION

(11) **EP 4 810 320 A1**
(43) Date of publication of application: **23.09.2026**
(21) Application number: 26163150.1
(22) Date of filing: 09.03.2026
(51) Int. Cl.: B60R 1/072

(54) **DOOR MIRROR DEVICE**

(30) Priority: 19.03.2025 JP 2025045783
(71) Applicant: Minebea AccessSolutions Inc., Miyazaki-shi, Miyazaki 880-0293 (JP)
(72) Inventor: ISOZAKI, Yusuke, Miyazaki, 880-0293 (JP); SHIMIZU, Norio, Miyazaki, 880-0293 (JP); NAGATOMO, Masaki, Miyazaki, 880-0293 (JP)
(74) Representative: Signori, Ludovico

(57) **Abstract**

A mirror drive unit 11 is provided with insertion holes 11a to 11d into which male screws 12A to 12D are inserted. A holding member 13 is disposed on a side opposite to a bracket 6 with respect to the mirror drive unit 11, and the holding member 13 is provided with female screw holes 13a to 13d into which the male screws 12A to 12D are screwed in order to hold and fix the mirror drive unit 11 between the bracket 6 and the holding member 13.

## Description

### CROSS REFERENCE TO RELATED APPLICATION

This application claims benefit of priority to Japanese Patent Application 2025-045783, filed March 19, 2025, the entire content of which is incorporated herein by reference.

### BACKGROUND

### Technical Field:

The present invention relates to a door mirror device.

### Background Art:

In a door mirror device disclosed in JP 2013-67194 A, a mirror drive unit is directly screw-fixed to a housing. Specifically, an insertion hole in which no female screw is formed is formed in the housing, and a female screw hole is formed in the mirror drive unit. A shaft portion of a male screw (having a male thread portion formed on an outer peripheral surface) is inserted into the insertion hole of the housing and then screwed and coupled to the female screw hole of the mirror drive unit. The housing is sandwiched between the head portion of the male screw and the mirror drive unit by this coupling, and thus the mirror drive unit is fixed to the housing.

### SUMMARY

In a case where the mirror drive unit is directly screw-fixed to the housing as in the door mirror device disclosed in JP 2013-67194 A, in order to secure fixing strength of the mirror drive unit to the housing, it is necessary that the male thread portion of the male screw is appropriately fastened to the female screw hole provided in the mirror drive unit. However, depending on the specifications of the mirror drive unit, the required depth of the female screw hole may not be ensured. In this case, fastening of the male thread portion of the male screw to the female screw hole is insufficient, and the fixing strength of the mirror drive unit to the housing cannot be ensured.

The present invention is intended to realize secure fixing of a mirror drive unit to a housing regardless of the specifications of the mirror drive unit in a door mirror device.

One aspect of the present invention provides a door mirror device including: a housing having an opening portion through which a mirror is exposed; a mirror drive unit accommodated in the housing and configured to adjust a posture of the mirror;
a fastening member configured to fix the mirror drive unit to the housing; an insertion hole provided in the mirror drive unit and through which the fastening member is inserted; and
a holding member disposed on a side opposite to the housing with respect to the mirror drive unit, the holding member including a coupling hole to which the fastening member is coupled to hold and fix the mirror drive unit between the housing and the holding member.

The fastening member is not directly coupled to the mirror drive unit, but is coupled to the coupling hole provided in the holding member disposed on the side opposite to the housing with respect to the mirror drive unit, and thus the mirror drive unit is held and fixed between the housing and the holding member. Therefore, the mirror drive unit can be fixed to the housing regardless of the specifications of the mirror drive unit.

The holding member may include: a plurality of boss portions each provided with the coupling hole; and a plurality of coupling portions each coupling two of the plurality of boss portions.

With this configuration, the mirror drive unit can be fixed to the housing by a single holding member, and an increase in the number of components can be avoided.

One of the housing and the holding member may include an engagement claw, and the other of the housing and the holding member may include an engagement hole with which the engagement claw is engaged.

With this configuration, the holding member can be temporarily held with respect to the housing in a state where the mirror drive unit is held between the holding member and the housing, and thus work of fixing the mirror drive unit to the housing by the fastening member is facilitated, and workability is improved.

A stopper portion may be provided on one of the mirror drive unit and the holding member, a fitting portion to which the stopper portion is fitted may be provided on the other of the mirror drive unit and the holding member, and a posture of the holding member when the stopper portion is fitted to the fitting portion may be set such that the insertion hole of the mirror drive unit is aligned with the coupling hole of the holding member.

When the stopper portion is fitted to the fitting portion, the insertion hole and the coupling hole are aligned with each other, that is, the fastening member can be inserted into the insertion hole and coupled to the coupling hole. Accordingly, the fastening member can be easily coupled to the coupling hole, thereby improving workability.

The housing may include a housing main body surrounding the mirror drive unit, and a bracket surrounded by the housing main body and to which the housing main body is fixed, and
the insertion hole may be provided in the bracket.

According to the door mirror device of the present invention, secure fixing of the mirror drive unit to the housing can be realized regardless of the specifications of the mirror drive unit.

### BRIEF DESCRIPTION OF DRAWINGS

Fig. 1 is a perspective view of a door mirror device according to an embodiment of the present invention as viewed from a vehicle front side;
Fig. 2 is a perspective view of the door mirror device of Fig. 1, as viewed from a vehicle rear side;
Fig. 3 is an exploded perspective view of the door mirror device of Fig. 1;
Fig. 4 is a perspective view of a bracket, a mirror drive unit, and a holding member as viewed from the vehicle front side (assembled state);
Fig. 5 is a perspective view of the bracket, the mirror drive unit, and the holding member as viewed from the vehicle rear side (assembled state);
Fig. 6 is a perspective view of the bracket, the mirror drive unit, and the holding member as viewed from the vehicle front side (exploded state);
Fig. 7 is a perspective view of the bracket, the mirror drive unit, and the holding member as viewed from the vehicle rear side (exploded state);
Fig. 8 is an end view taken along the line VIII-VIII of Fig. 4;
Fig. 9 is an end view taken along the line XI-XI of Fig. 4;
Fig. 10 is a perspective view of the holding member as viewed from the vehicle front side; and
Fig. 11 is a perspective view of the holding member as viewed from the vehicle rear side.

### DETAILED DESCRIPTION

Hereinafter, an embodiment of the present invention will be described with reference to the accompanying drawings.

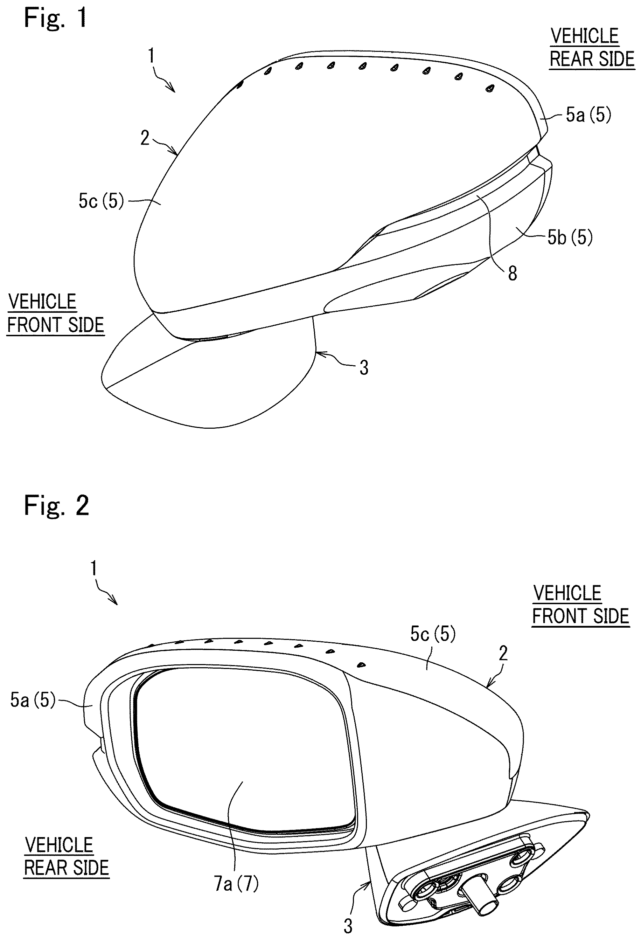

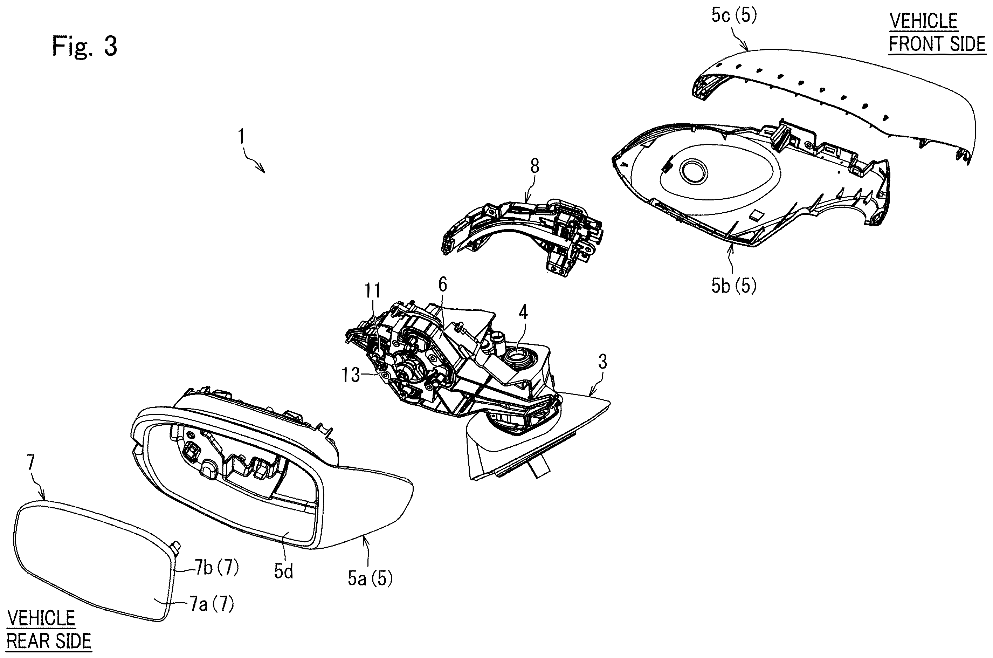

Referring to Figs. 1 and 3, a door mirror device 1 according to the embodiment of the present invention includes a housing 2 and a base 3. The base 3 is fixed to a vehicle body (not illustrated). The housing 2 is arranged on the base 3. An electric drive unit 4 (illustrated only in Fig. 3) for turning the housing 2 between a storage position and a use position is held by a bracket 6 described below and is accommodated in the housing 2 (more specifically, in a housing main body 5 described below). A shaft of the electric drive unit 4 protrudes toward a lower side in a vehicle height direction from the housing main body 5 and is fastened to an upper end of the base 3.

The housing 2 includes the housing main body 5 and a bracket 6 both made of resin. In the present embodiment, the housing main body 5 has a dividable structure including a plurality of components. Specifically, the housing main body 5 includes a visor 5a constituting a vehicle rear side and a part of the lower side in the vehicle height direction, a lower part 5b constituting a part of the remaining portion of the lower side in the vehicle height direction and a part of the vehicle front side, and a cover 5c constituting an upper side in the vehicle height direction and a part of the remaining portion of the vehicle front side.

The bracket 6 is accommodated in the housing main body 5. Of the components of the housing main body 5, the visor 5a and the lower part 5b are fixed to the bracket 6 with screws, and the cover 5c is disengageably engaged with the visor 5a and the lower part 5b.

A mirror unit 7 is accommodated in the housing main body 5. The mirror unit 7 includes a mirror 7a and a mirror holder 7b that holds the mirror 7a. A window portion (opening portion) 5d is provided in the visor 5a. The mirror unit 7 is accommodated in the housing main body 5 so that the mirror surface of the mirror 7a is exposed through the window portion 5d.

A side turn lamp 8 is accommodated in the housing main body 5 so as to be exposed on an outer side of the housing main body 5 in a vehicle width direction.

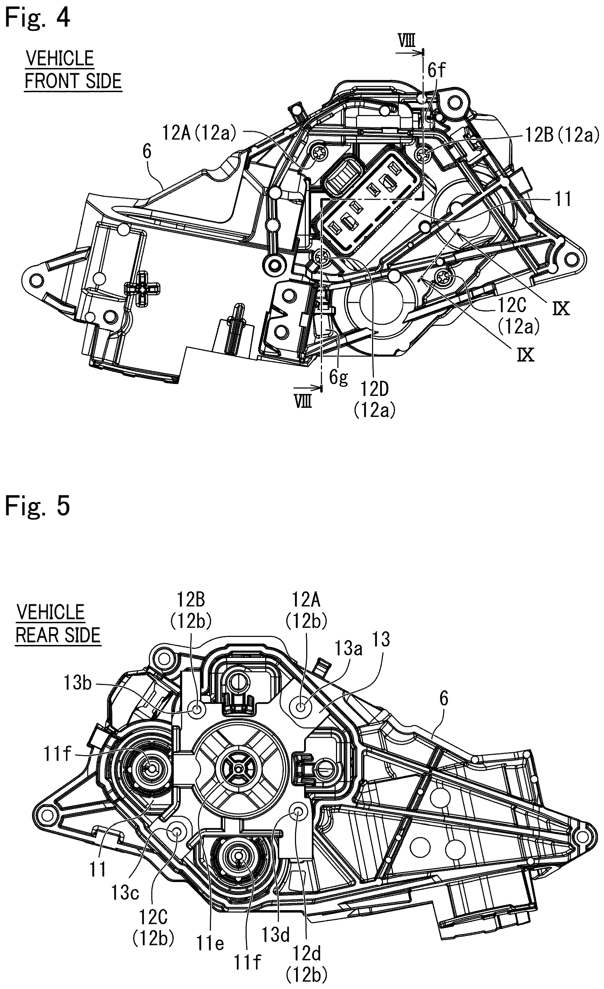

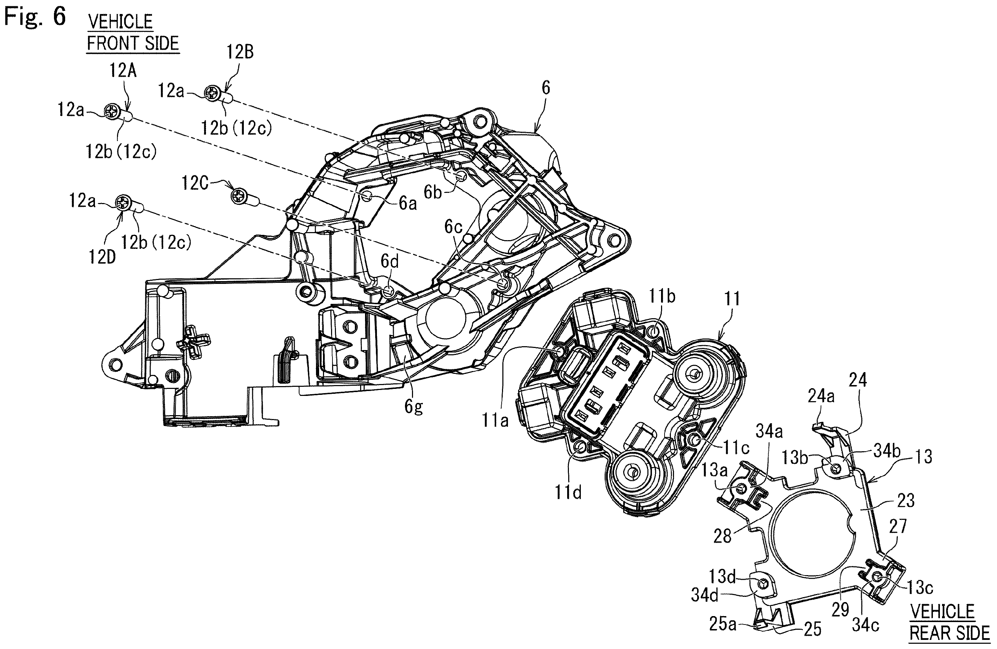

Referring to Figs. 4 to 6 in addition to Fig. 3, a mirror drive unit 11 is accommodated in the housing main body 5. The mirror drive unit 11 includes, on the vehicle rear side, a support shaft 11e that supports the mirror holder 7b such that the posture of the mirror holder 7b can be changed. Output portions 11f included in the mirror drive unit 11 on the vehicle rear side are mechanically connected to the mirror holder 7b. The posture of the mirror unit 7, that is, the posture of the mirror 7a (for example, the orientation in the vehicle height direction or the vehicle width direction) is adjusted by the operation of the output portions 11f. The mirror drive unit 11 is fixed to the bracket 6. Hereinafter, a fixing structure of the mirror drive unit 11 to the bracket 6 will be described in detail.

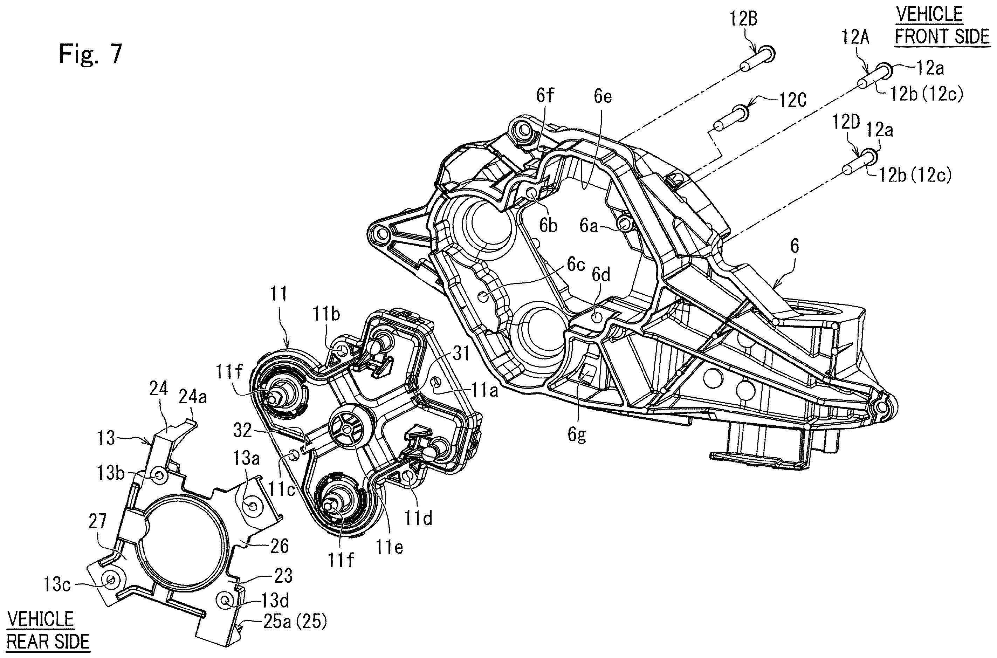

Referring to Figs. 4 to 7, the door mirror device 1 of the present embodiment includes four male screws (fastening members) 12A, 12B, 12C, and 12D and one holding member 13 in order to fix the mirror drive unit 11 to the bracket 6. All of the members are accommodated in the housing main body 5. In the present embodiment, the holding member 13 is made of resin. The male screws 12A to 12D each include a head portion 12a and a shaft portion 12c extending from the head portion 12a and having a male thread portion 12b formed on an outer peripheral surface of the shaft portion 12c.

Continuously referring to Figs. 4 to 7, the mirror drive unit 11 is disposed on the vehicle rear side with respect to the bracket 6, and the holding member 13 is disposed on the vehicle rear side with respect to the mirror drive unit 11. That is, the holding member 13 is disposed on a side opposite to the bracket 6 with respect to the mirror drive unit 11 in a vehicle length direction. The mirror drive unit 11 is fixed to the bracket 6 by being held between the bracket 6 and the holding member 13, and for this holding, the holding member 13 is fastened to the bracket 6 by the male screws 12A to 12D.

As just described, the male screws 12A to 12D are not directly coupled to the mirror drive unit 11, but are coupled to female screw holes 13a to 13d provided in the holding member 13 disposed on the side opposite to the bracket 6 with respect the mirror drive unit 11, and thus the mirror drive unit 11 is held and fixed between the bracket 6 and the holding member 13. Therefore, the mirror drive unit 11 can be fixed to the bracket 6 regardless of the specifications of the mirror drive unit 11.

Referring to Figs. 4 to 7, four insertion holes 6a, 6b, 6c, and 6d for inserting the shaft portions 12c of the male screws 12A to 12D are provided in the bracket 6 so as to extend therethrough in the vehicle length direction. No female thread portion is formed on the insertion holes 6a to 6d. The diameter of the insertion holes 6a to 6d are set to be smaller than the diameter of the head portions 12a while allowing the shaft portions 12c of the male screws 12A to 12D to be inserted through the insertion holes 6a to 6d.

Referring to Figs. 4 to 7, four insertion holes 11a, 11b, 11c, and 11d for inserting the shaft portions 12c of the male screws 12A to 12D are also provided in the mirror drive unit 11 so as to extend therethrough in the vehicle length direction. No female thread portion is formed on the insertion holes 11a to 11d, and hole diameters thereof are set as with the insertion holes 6a to 6d.

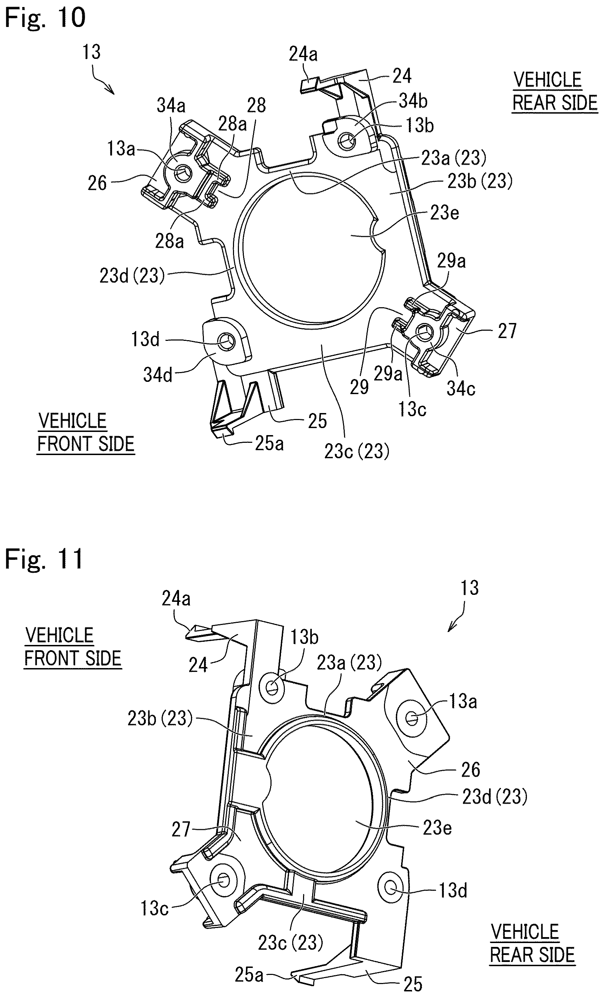

Referring to Figs. 10 and 11 in addition to Figs. 4 to 7, the holding member 13 is provided with four female screw holes (coupling holes) 13a, 13b, 13c, and 13d for screwing and coupling the shaft portions 12c of the male screws 12A to 12D.

When the mirror drive unit 11 is overlapped with the bracket 6 in a normal posture and the holding member 13 (more specifically, a holding member main body 23 described below) is overlapped with the mirror drive unit 11 in a normal posture, the insertion holes 6a to 6d of the bracket 6, the insertion holes 11a to 11d of the mirror drive unit 11, and the female screw holes 13a to 13d of the holding member 13 are aligned with each other. In a state where the bracket 6, the mirror drive unit 11, and the holding member 13 are overlapped in the normal posture in this manner, the shaft portions 12c of the male screws 12A to 12D are inserted into the insertion holes 6a to 6d and further the insertion holes 11a to 11d from the vehicle front side of the bracket 6, and are allowed to extend through the bracket 6 and the mirror drive unit 11. The shaft portions 12c of the male screws 12A to 12D extending through the bracket 6 and the mirror drive unit 11 in this manner are screwed and coupled to the female screw holes 13a to 13d of the holding member 13 until predetermined torque is generated, and thus the mirror drive unit 11 is held between the bracket 6 and the holding member 13 to be fixed to the bracket 6.

A housing recessed portion 6e is provided on a surface on the vehicle rear side of the bracket 6 so that the mirror drive unit 11 can be overlapped with the bracket 6 in the aforementioned normal posture, that is, in a posture in which the insertion holes 6a to 6d of the bracket 6 and the insertion holes 11a to 11d of the mirror drive unit 11 are aligned with each other. The shape and dimensions of the housing recessed portion 6e are set so that the mirror drive unit 11 can be housed in the housing recessed portion 6e only when the mirror drive unit 11 is overlapped in the aforementioned normal posture.

Referring to Figs. 10 and 11 in addition to Figs. 4 to 7, the holding member 13 includes the holding member main body 23 that is in contact with the mirror drive unit 11 from the vehicle rear side to hold the mirror drive unit 11 between the bracket 6 and the holding member 13. The holding member main body 23 includes four coupling portions 23a, 23b, 23c, and 23d extending in different directions from each other, and has a substantially rectangular outer contour. The holding member main body 23 is provided in the center with a window portion 23e through which the support shaft 11e of the mirror drive unit 11 is inserted to enable connection to the mirror unit 7.

The holding member 13 includes a pair of L-shaped arm portions 24 and 25 having base ends integrally connected to the holding member main body 23. The L-shaped arm portions 24 and 25 are provided on one diagonal line of a rectangle formed by the outer contour of the holding member main body 23. The L-shaped arm portion 24 extends from a corner portion formed by the coupling portion 23a and the coupling portion 23b in the same direction as the coupling portion 23b, and is further bent to extend toward the vehicle front side. The L-shaped arm portion 25 extends from a corner portion formed by the coupling portion 23c and the coupling portion 23d in the same direction as the coupling portion 23d, and is further bent to extend toward the vehicle front side. Engagement claws 24a and 25a that are triangular projections are provided at distal ends of the L-shaped arm portions 24 and 25.

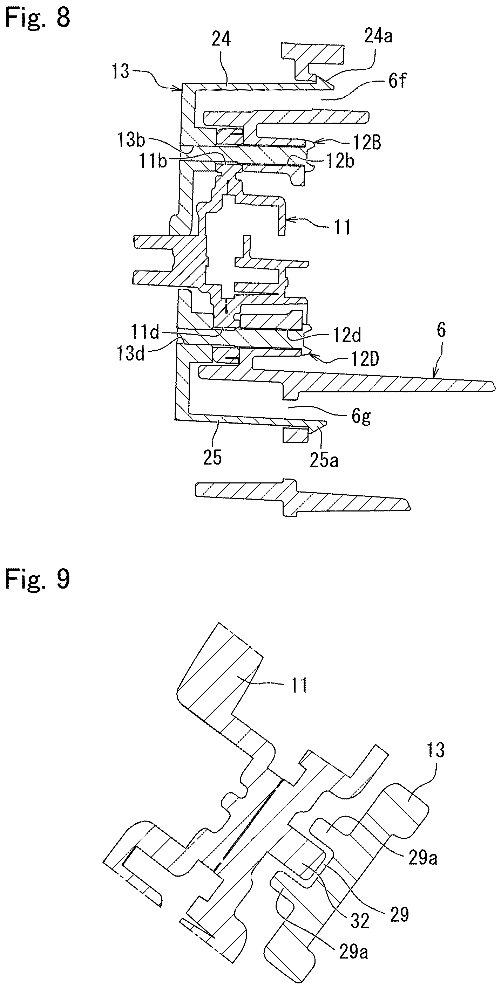

The bracket 6 is provided with engagement holes 6f and 6g corresponding to the engagement claws 24a and 25a of the holding member 13. As most clearly illustrated in Fig. 8, when the mirror drive unit 11 is accommodated in the housing recessed portion 6e of the bracket 6, the mirror drive unit 11 is overlapped with the bracket 6 in the aforementioned normal posture, and the holding member 13 is overlapped with the mirror drive unit 11 in the aforementioned normal posture, the engagement claws 24a and 25a are disengageably engaged with the engagement holes 6f and 6g, and the holding member 13 can be temporarily held with respect to the bracket 6 in a state where the mirror drive unit 11 is held between the holding member 13 and the bracket 6. By this temporary holding, in work of inserting the shaft portions 12c of the male screws 12A to 12D into the insertion holes 6a to 6d of the bracket 6 and the insertion holes 11a to 11d of the mirror drive unit 11 and further screwing and coupling the shaft portions 12c of the male screws 12A to 12D into the female screw holes 13a to 13d of the holding member 13, it is not necessary to hold the holding member 13 by hand. Therefore, the work of fixing the mirror drive unit 11 to the bracket 6 by the male screws 12A to 12D is facilitated, and workability is improved.

The holding member 13 includes a pair of linear arm portions 26 and 27 having base ends integrally connected to the holding member main body 23. The linear arm portions 26 and 27 are provided on the other diagonal line of the rectangle formed by the outer contour of the holding member main body 23. The linear arm portion 26 extends from a corner portion formed by the coupling portion 23a and the coupling portion 23d in the direction of the other diagonal line. The linear arm portion 27 extends from a corner portion formed by the coupling portion 23b and the coupling portion 23c in the direction of the other diagonal line.

Fitting portions 28 and 29 are provided at base end sides of the linear arm portions 26 and 27. The fitting portion 28 is a gap between a pair of ribs 28a, and similarly, the fitting portion 29 is also a gap between a pair of ribs 29a.

Rib-shaped or projection-shaped stopper portions 31 and 32 are provided on a surface on the vehicle rear side of the mirror drive unit 11 so as to correspond to the fitting portions 28 and 29 of the holding member 13. As most clearly illustrated in Fig. 9, when the mirror drive unit 11 is accommodated in the housing recessed portion 6e of the bracket 6, the mirror drive unit 11 is overlapped with the bracket 6 in the aforementioned normal posture and the holding member 13 is overlapped with the mirror drive unit 11 in the aforementioned normal posture, the stopper portions 31 and 32 can be fitted to the fitting portions 28 and 29. In other words, when the stopper portions 31 and 32 are fitted to the fitting portions 28 and 29, the insertion holes 6a to 6d and 11a to 11d and the female screw holes 13a to 13d are aligned with each other, that is, the shaft portions 12c of the male screws 12A to 12D can be inserted into the insertion holes 6a to 6d and 11a to 11d and screwed and coupled to the female screw holes 13a to 13d. Therefore, by providing the stopper portions 31 and 32 and the fitting portions 28 and 29, the male screws 12A to 12D are easily coupled to the female screw holes 13a to 13d, and workability is improved.

The holding member 13 includes four boss portions 34a, 34b, 34c, and 34d integrally provided with the holding member main body 23 at the base sides of the L-shaped arm portions 24 and 25 and the distal end sides of the linear arm portions 26 and 27. The boss portions 34a to 34d are provided with the female screw holes 13a to 13d, respectively. The thickness of the boss portions 34a to 34d is set to be larger than the thickness of the holding member main body 23. By setting the thickness of the boss portions 34a to 34d in this manner, a sufficient depth of the female screw holes 13a to 13d, that is, a depth such that the number of threads of the male screw portions 12b of the male screws 12A to 12D and the female screw holes 13a to 13d meshing with the male screw portions can obtain the required axial tension is secured.

Two adjacent female screw holes of the boss portions 34a to 34d provided with the female screw holes 13a to 13d are connected to each other by one of the coupling portions 23a to 23d. For example, the female screw holes 13a and 13b are connected to each other by the coupling portion 23a. In other words, the holding member main body 23 constituted by the four coupling portions 23a to 23d and the boss portions 34a to 34d provided with the female screw holes 13a to 13d are a single component having an integral structure, and an increase in the number of components can be avoided.

The present invention is not limited to the embodiment, and for example, there are various modified examples as listed below.

The engagement claws may be provided on the bracket, and the engagement holes may be provided in the holding member.

The fitting portions may be provided on the mirror drive unit, and the stopper portions may be provided on the holding member.

The mirror drive unit may be disposed on the vehicle front side with respect to the bracket, the holding member may be disposed on the vehicle front side with respect to the mirror drive unit, and the shaft portions of the male screws may be inserted into the insertion holes of the bracket and the mirror drive unit from the vehicle rear side of the bracket and screwed and coupled to the female screw holes of the holding member.

In the above embodiment and the modified examples thereof, the mirror drive unit may be fixed to, instead of the bracket, another portion of the housing, for example, a part of the housing main body by the holding member and the male screws.

## Claims

1. A door mirror device (1) comprising:
a housing (2) including an opening portion (5d) through which a mirror (7a) is exposed;
a mirror drive unit (11) accommodated in the housing (2) and configured to adjust a posture of the mirror (7a);
a fastening member (12A, 12B, 12C, 12D) configured to fix the mirror drive unit (11) to the housing (2);
an insertion hole (6a, 6b, 6c, 6d) provided in the mirror drive unit (11) and through which the fastening member (12A, 12B, 12C, 12D) is inserted; and
a holding member (13) disposed on a side opposite to the housing (2) with respect to the mirror drive unit (11), the holding member (13) including a coupling hole (13a, 13b, 13c, 13d) to which the fastening member (12A, 12B, 12C, 12D) is coupled to hold and fix the mirror drive unit (11) between the housing (2) and the holding member (13).

2. The door mirror device (1) according to claim 1, wherein
the holding member (13) includes:
a plurality of boss portions (34a, 34b, 34c, 34d) each provided with the coupling hole (13a, 13b, 13c, 13d); and
a plurality of coupling portions (23a, 23b, 23c, 23d) each coupling two of the plurality of boss portions (34a, 34b, 34c, 34d).

3. The door mirror device (1) according to claim 1, wherein
one of the housing (2) and the holding member (13) includes an engagement claw (24a, 25a), and
the other of the housing (2) and the holding member (13) includes an engagement hole (6f, 6g) with which the engagement claw (24a, 25a) is engaged.

4. The door mirror device (1) according to claim 1, wherein
a stopper portion (31, 32) is provided on one of the mirror drive unit (11) and the holding member (13),
a fitting portion (28, 29) to which the stopper portion (31, 32) is fitted is provided on the other of the mirror drive unit (11) and the holding member (13), and
a posture of the holding member (13) when the stopper portion (31, 32) is fitted to the fitting portion (28, 29) is set such that the insertion hole (6a, 6b, 6c, 6d) of the mirror drive unit (11) is aligned with the coupling hole (13a, 13b, 13c, 13d) of the holding member (13).

5. The door mirror device (1) according to claim 1, wherein
the housing (2) includes a housing main body (5) surrounding the mirror drive unit (11), and
a bracket (6) surrounded by the housing main body (5) and to which the housing main body (5) is fixed, and
the insertion hole (6a, 6b, 6c, 6d) is provided in the bracket (6).
